# EUROPEAN PATENT SPECIFICATION

(11) **EP 4 558 363 B1**
(45) Date of publication and mention of the grant of the patent: **08.04.2026**
(21) Application number: 23768217.4
(22) Date of filing: 06.09.2023
(51) Int. Cl.: B60R 21/23, B32B 5/02, B32B 5/26, B32B 27/12, B32B 27/40, D03D 1/02

(54) **A METHOD OF PRODUCING LAMINATED AIRBAGS, AND A RELATED LAMINATED AIRBAG**
VERFAHREN ZUR HERSTELLUNG VON LAMINIERTEN AIRBAGS UND ZUGEHÖRIGER LAMINIERTER AIRBAG
PROCÉDÉ DE PRODUCTION DE COUSSINS DE SÉCURITÉ GONFLABLES STRATIFIÉS, ET COUSSIN DE SÉCURITÉ GONFLABLE STRATIFIÉ ASSOCIÉ

(30) Priority: 14.09.2022 DE 102022123504
(43) Date of publication of application: 28.05.2025
(73) Proprietor: Autoliv Development AB, 447 83 Vårgårda (SE)
(72) Inventor: WOOTTON, Gary, Stoke-on-Trent Staffordshire ST7 3PH (GB); DOLMAN, Jez, Congleton Cheshire CW12 4EG (GB)
(74) Representative: Mewburn Ellis LLP
(86) International application number: PCT/EP2023/074425
(87) International publication number: WO 2024/056482

(56) References cited:
- US-A- 5 110 666
- US-A- 5 131 434
- US-A1- 2021 138 994

## Description

### Field of the Invention

In a first aspect, the present invention relates to a method of producing laminated airbags. In a second aspect, the present invention relates to a laminated airbag produced by the method of the first aspect.

### Background

Inflatable airbags are well known, for example in the field of safety devices for motor vehicles. Such airbags are typically configured for deployment via inflation if an accident such as an impact or crash is detected, to provide cushioning protection to the occupant(s) of a motor vehicle, or to pedestrians, cyclists or other vulnerable road users. As will be appreciated, to provide effective protection, it is important that such airbags are inflated rapidly, so that they will achieve substantially full deployment very quickly.

Inflation times vary between particular types of airbag, depending on their intended function. For example, so-called inflatable curtain airbags, which are arranged to deploy within the cabin of a motor vehicle, across the side windows, to provide protection to vehicle occupants in the event of a roll-over accident, are required to inflate very rapidly indeed. This is because the space between the occupants of a motor vehicle and the side windows of the motor vehicle is very limited, thereby reducing the time available for the inflatable curtain to achieve full inflation, and limiting the inflated depth of the airbag. These factors combine to require inflatable curtains not only to inflate very rapidly, but also to inflate with a particularly high pressure relative to other types of motor vehicle airbags. Also, due to the potentially prolonged period of a roll-over type accident for which inflatable curtains are intended to provide occupant protection, inflatable curtain airbags are required to maintain a substantially fully inflated condition for a considerably longer period than most other types of motor vehicle airbags. Accordingly, inflatable curtain airbags are generally required to have the highest pressure-retention performance of any type of motor vehicle airbag. For example, a typical inflatable curtain airbag might be required to have a pressure-retention value in the region of 50% of peak pressure, 5 seconds after initial inflation (e.g., to provide an internal pressure of approximately 20kPa at 6 seconds after initial inflation, compared to a peak inflation pressure of approximately 40kPa).

The above-noted performance characteristics of inflatable curtain airbags means that the integrity of the seams of such airbags is very important to prevent leakage of inflating gas during the period for which the airbag is required to remain substantially fully inflated. Accordingly, it is known to configure inflatable curtain airbags (as well as some other types of high-performance motor vehicle airbags) as so-called 'one-piece-woven' ("OPW") airbags, in which seams of the airbag (such as the peripheral seam) are integrally formed from the woven structure of the two layers of woven fabric defining the airbag. In such OPW airbags, the inflatable chamber of the airbag is defined between a pair of woven layers of fabric, and the seams of the airbag are defined by regions in which the yarns of the weave one layer of fabric are interwoven with yarns of the weave of the other layer such that the seams are provided as an integral feature of the woven structure of the fabric. Such a structure provides very good seam integrity.

Airbags have also been proposed for use in personal protection devices that are intended to provide specific protection for dedicated body parts by arranging the airbag in the vicinity of a certain body part to be protected. By wearing a garment or accessory comprising a suitably configured airbag arranged at a defined position on the wearer's body, the airbag may be inflated in the event of an imminent or ongoing accident to provide a cushioning effect for that certain body part. For example, it has been proposed to equip protective motorcycle garments (such as jackets, over-trousers, or whole-body suits) for riders of motorcycles, or other powered two-wheel vehicles, with one or more inflatable airbags that are arranged to deploy upon detection of a fall or crash, to provide a cushioning effect and thereby reduce impact forces acting on the body of the wearer.

It has been found that airbags for personal protection devices of the general type discussed above (such as, for example, motorcycle protective garments) must have an even higher pressure-retention performance than current motor vehicle inflatable curtain airbags. Additionally, whilst most motor vehicle airbags such as inflatable curtains are required to deploy only once, it is desirable for personal protection devices to incorporate airbags which may be repackaged after deployment, for subsequent use. For example, in some applications, it may be considered desirable for airbags provided within protective motorcycle garments to be deployable up to three times (and repackaged between such deployments), with negligible reduction in inflation performance from one deployment to the next. Each deployment will place considerable stress on the seams of such an airbag, and so the seam integrity of such personal protective airbags can be even more onerous than for motor vehicle inflatable curtain airbags. It is therefore considered that OPW airbags are also particularly suitable for such personal protective airbags, but that in some cases further steps may be necessary to improve seam integrity even further.

It has been found that by laminating a fabric airbag of the general type discussed above (optionally including a polyurethane coating on the outer surface of each layer of fabric) between a pair of thin film layers (such as thin film layers of thermoplastic polyurethane ("TPU")), with the two thin films layers sealed to one another around the periphery of the fabric airbag, leakage of inflating gas from the airbag can be greatly reduced, thereby permitting a significant improvement in pressure-retention performance, even over a number of deployments.

OPW airbags are typically integrally woven within an elongate web comprising two layers of fabric which are woven simultaneously on a specially configured loom. The resulting web will comprise a pair of woven fabric layers which are interconnected in regions defining the seams of a plurality of airbags. The individual fabric airbags are then cut from the web. The resulting fabric airbags may then be laminated between the two thin film layers to form laminated airbags. For the laminated thin film layers to provide an effective and robust seal around the woven peripheral seam of the airbag, it is important that the two thin film layers are sealed directly to one another (for example via adhesive) around the outer cut edges of each fabric airbag. This can easily be achieved if the laminating step is performed separately on each individual fabric airbag after it has been cut from the web. However, laminating a plurality of individual fabric airbags separately is time consuming and can thus be expensive and/or inconvenient, and can introduce potential for manufacturing inconsistencies.

US2021/0138994A1 discloses a one-piece woven airbag for an occupant protection device, and a method for manufacturing such an airbag.

The present invention has been devised in light of the above considerations.

### Summary of the Invention

According to a first aspect of the present invention, there is provided a method of producing laminated airbags, the method involving: providing a flexible web comprising a pair of superimposed woven fabric layers with a plurality of adjacent airbag preforms formed between said fabric layers such that each said airbag preform comprises a respective peripheral seam interconnecting said woven fabric layers and defining a periphery of the respective airbag preform; an initial cutting step in which a plurality of first cuts are made through both fabric layers outside the periphery of each airbag preform, said cuts cooperating to collectively encircle the periphery of each said airbag preform except for at least one uncut connecting region of the flexible web located between each respective adjacent pair of airbag preforms; a removal step in which regions of said fabric layers outside the periphery of each airbag preform and which are separated by said cuts are removed from the flexible web to form a reduced web in which said airbag preforms remain interconnected by the or each said connecting region; a laminating step in which said reduced web is laminated between two thin film layers to form a laminated web, wherein said thin film layers are sealed directly to one another around each said airbag preform to form a respective peripheral seal extending around the peripheral seam of each said airbag preform except at the location of the or each said connecting region; and a second cutting step in which a respective peripheral cut is made through said laminated web, around each peripheral seam and in the region of the respective said peripheral seal, thereby separating a respective laminated airbag from said laminated web.

Each airbag preform may be defined within said flexible web by a respective peripheral seam which is formed by a region of the web in which yarns of the weave of one said layer are interwoven with yarns of the weave of the other said layer. In such a method and arrangement, the resulting airbags will each be so-called 'one-piece woven' (OPW) airbags having a peripheral seam which is integrally formed as part of the inherent structural weave of the woven fabric. Airbag seams formed via such a one-piece weaving technique are particularly strong in comparison to more conventional stitched, glued or otherwise bonded seams, which can be advantageous for some applications. For example, the integrally woven seams of OPW airbags can provide a very high resistance to leakage, which can be particularly advantageous in applications in which the airbag must be inflated very rapidly, and/or to a high pressure, and/or which must be inflated repeatedly.

Optionally, said superimposed woven fabric layers are unconnected to one another within the or each connecting region. By leaving the two fabric layers unconnected (e.g., not interwoven) in the connecting regions, then (in embodiments in which the second cutting step involves cutting through the fabric in the connecting regions) the peripheral cuts may be made more easily in the second cutting step.

At least part of each first cut made in the initial cutting step may be proximate but spaced outwardly from the periphery of an airbag preform. In this manner, each first cut will be positioned clear of the peripheral seam of each airbag preform, thereby preserving the structural integrity of the peripheral seam of the resulting airbags.

Optionally, each first cut made in the initial cutting step is circuital so as to circumscribe a respective region of each fabric layer for removal from the flexible web in the removal step, thereby defining a respective window in the reduced web. By making circuital cuts defining respective windows in the reduced web, the area of fabric removed from the flexible web can be reduced, thereby leaving a greater area of fabric in the reduced web. This can help improve the handling of the reduced web, for example by making it easier to wind onto or into a roll in a subsequent step of the process.

The initial cutting step may provide a plurality of said connecting regions at spaced-apart positions around the periphery of each airbag preform, each connecting region being defined between an adjacent pair of windows in the reduced web.

In embodiments in which windows are created in the reduced web, the laminating step may involve sealing the film layers directly to one another through each window formed in the reduced web.

Optionally, the initial cutting step involves making said first cuts simultaneously through both layers of woven fabric. This simplifies the cutting step and ensures that the first cuts formed through both layers of fabric are accurately aligned, which in turn helps to define a consistent edge to the fabric defining the respective airbags.

The peripheral cuts made in the second cutting step may each be made in spaced relation to a respective peripheral seam and outside the peripheral seam. This ensures that a sufficient width of the peripheral seal (i.e., the region in which the two thin film layers are sealed to one another) will remain around the peripheral seam of each fabric airbag to ensure good sealing around the seam.

In preferred embodiments it is envisaged that the cuts made during the first and/or second cutting steps will be made via laser cutting.

Optionally, each peripheral cut extends through the or each connecting region, thereby splitting the or each connecting region. It is preferred that each connecting region will be narrow (as considered along the path of the peripheral cuts), so that the interruptions in the peripheral seal arising from the connecting regions therearound will be small. This helps to minimise leakage of inflating gas through the peripheral seal when the airbag is inflated. In embodiments where the peripheral cuts are made via laser cutting, the power and/or speed of the laser may be adjusted when the laser is cutting through the or each connecting region, relative to the power and/or speed used whilst the laser is cutting through the laminated peripheral seal For example, the power of the laser may be increased and/or the speed at which the laser moves across the laminated web may be reduced during laser cutting through the or each connecting region, relative to the power/speed of the laser during cutting through other regions of the laminated peripheral seal.

Optionally, the method further comprises a winding step in which the reduced web is wound onto or into a roll, said winding step being performed between the removal step and the laminating step. This is facilitated by the connecting regions which serve to interconnect the airbag preforms in the reduced web. The integrity of the reduced web is thereby retained, permitting it to be wound onto or into a roll for easier handling and/or movement and/or storage prior to the subsequent laminating step of the process. In this way, the plurality of airbag preforms remain part of a flexible web, which can subsequently be laminated as a whole, rather than necessitating the separate lamination of discrete airbag preforms. This permits lamination of a number of airbag preforms in a batch process rather than one by one.

Optionally, the method further comprises a winding step in which the laminated web is wound onto or into a roll, said winding step being performed between the laminating step and the second cutting step. Again, this permits the laminated web (comprising a plurality of laminated airbag preforms) to be more easily handled and/or moved and/or stored prior to the subsequent second cutting step in which the respective final laminated airbags are separated from the web.

Preferably, either: i) the flexible web is coated on at least one side with a coating prior to said initial cutting step, or ii) the reduced web is coated on at least one side with a coating prior to said laminating step. In preferred embodiments, it is envisaged that the coating may comprise polyurethane. The coating may be applied to both sides of the flexible web, or the reduced web.

The laminating step may involve laminating the reduced web between two thin-film layers of thermoplastic polyurethane ("TPU").

According to a second aspect of the present invention, there is provided a laminated airbag produced according to the method of the first aspect. In some embodiments, the airbag may be characterised by comprising a pair of superimposed layers of woven fabric defining an inflatable chamber therebetween, the two layers of fabric being interconnected around the periphery of the airbag to define a peripheral seam, and wherein the superimposed layers of fabric are laminated between a pair of thin film layers, the thin film layers being sealed to one another to define a peripheral seal extending around the outside of the peripheral seam. The peripheral seal may extend substantially entirely around the peripheral seam except for regions in which remnants of said connecting regions remain. In some embodiments, the peripheral seam of the airbag may be formed by a region in which yarns of the weave of one said fabric layer are interwoven with yarns of the weave of the other said fabric layer. The fabric layers may comprise a coating (e.g., a polyurethane coating) on their outwardly-facing surfaces. The thin film layers may be formed of thermoplastic polyurethane ("TPU").

### Summary of the Figures

So that the invention may be more readily understood, and so that further features thereof may be appreciated, embodiments of the invention will now be described by way of example with reference to the accompanying drawings in which:
Figure 1 is a schematic drawing showing a flexible web comprising a pair of superimposed fabric layers and a number of airbag preforms;
Figure 2 is a schematic drawing similar to that of Figure 1, but which shows a region of the flexible web after an initial cutting step;
Figure 3 is a schematic drawing showing more detail of an enlarged region of the web depicted in Figure 2, after the cutting step;
Figure 4 is a drawing similar to that of Figure 2, but which shows a reduced web formed from the flexible web after a subsequent removal step;
Figure 5 is a drawing similar to that of Figure 4, but which shows a laminated web formed from the reduced web after a subsequent laminating step;
Figure 6 is a schematic drawing showing an enlarged region of the laminated web after a second cutting step;
Figure 7 is a schematic drawing similar to that of Figure 4, but which shows an alternative form of reduced web formed after alternative cutting and removal steps;
Figure 8 is a schematic drawing showing a laminated web formed from the reduced web of Figure 7 after a subsequent laminating step;
Figure 9 is a schematic drawing showing more detail of an enlarged region of the laminated web shown in Figure 8;
Figure 10 is a schematic drawing showing the laminated web of Figure 8 after a second cutting step; and
Figure 11 is a schematic drawing showing more detail of the enlarged region of the laminated web shown after the second cutting step.

### Detailed Description of the Invention

Aspects and embodiments of the present invention will now be discussed with reference to the accompanying figures. Further aspects and embodiments will be apparent to those skilled in the art.

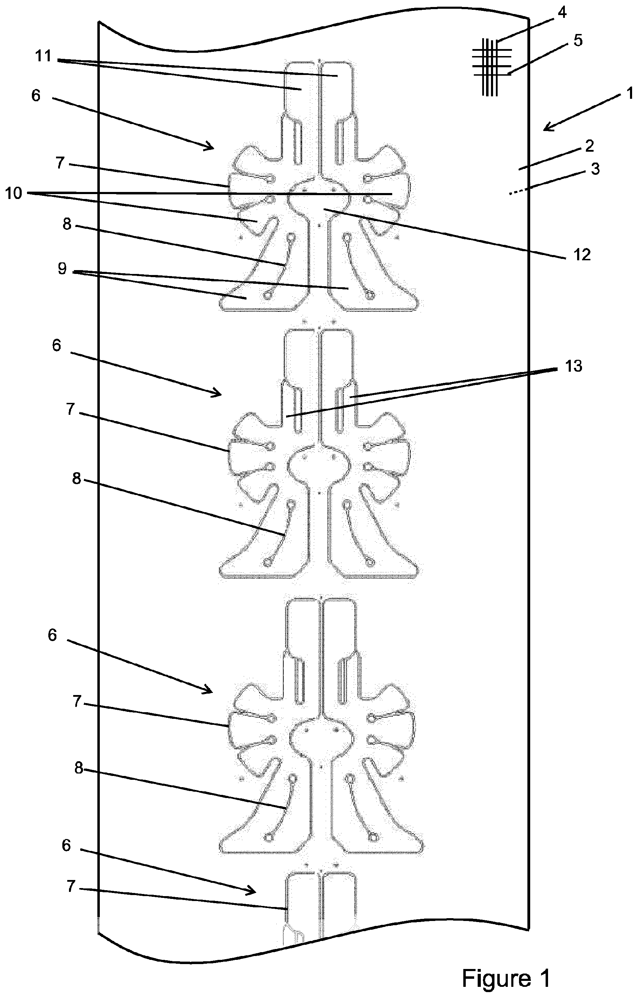

Turning initially to consider Figure 1, there is illustrated a length region of an elongate flexible web 1 comprising a pair of superimposed woven fabric layers 2, 3. The two fabric layers 2, 3 are woven simultaneously on a specially configured loom (of a type known *per se*), from warp yarns 4 and weft yarns 5 (denoted schematically in Figure 1). Across a major extent of the web 1, the two fabric layers 2, 3 are formed so as to be distinct and separate from one another, and thus unconnected. However, in predetermined regions of the web 1, the yarns 4, 5 of the two layers 2, 3 are interwoven to define seams of a plurality of airbag preforms 6. Each airbag preform 6 is thus defined within the flexible web 1 so as to be formed between the two fabric layers 2, 3, and comprises at least a peripheral seam 7 interconnecting the fabric layers and defining its periphery. The peripheral seam 7 (and also optionally one or more internal seams 8) of each airbag preform 6 is thus formed by a region of the flexible web in which the yarns 4, 5 of the weave of one fabric layer 2 are interwoven with yarns 4, 5 of the weave of the other fabric layer 3, for example via a so-called one-piece weaving technique. An exemplary one-piece weaving technique is described in more detail in International Patent Publication WO199009295A.

As will be observed, the airbag preforms 6 are each positioned in alignment along the longitudinal length of the flexible web 1 illustrated in Figure 1. However, it is to be appreciated that the airbag preforms 6 could be distributed differently within the flexible web 6, for example to make more effective use of the area of the web. An important aspect, however, is that the airbag preforms 6 are all spaced from one another within the web 1.

In the particular embodiment illustrated, the airbag preforms 6 are each provided in a shape and configuration suitable for the creation of a finished laminated airbag for installation inside a garment such as a jacket or suit, in order to provide protection to the torso and upper body of a wearer, for example a motorcyclist. Each airbag preform 6 thus comprises a pair of chest portions 9, a pair of shoulder regions 10 (each comprising three 'wings' to facilitate deployment around the curve of an occupant's shoulders) and a pair a back portions 11 As will be seen, a central opening 12 is defined by the peripheral seam 7, which will accommodate the wearer's neck in the finished airbag. Each airbag preform 6 also comprises a pair of inlet sections 13, which will define inlet channels for the receipt of inflating gas, for example from an inflator incorporated into the garment. It is to be appreciated, however, that the present invention is not limited to the provision of airbags of this particular type, and can alternatively be embodied in the production of airbags of other types. Furthermore, it is not necessary for all the airbag preforms 6 provided within a single flexible web 1 to be of the same type or to have the same configuration. It is therefore possible for a single elongate flexible web 1 to comprise several differently configured airbag preforms 6.

The flexible web 1 may be coated with a thin surface coating of polyurethane after it has been woven. The polyurethane coating may be applied by a spraying technique and is preferably applied to both sides of the flexible web 1.

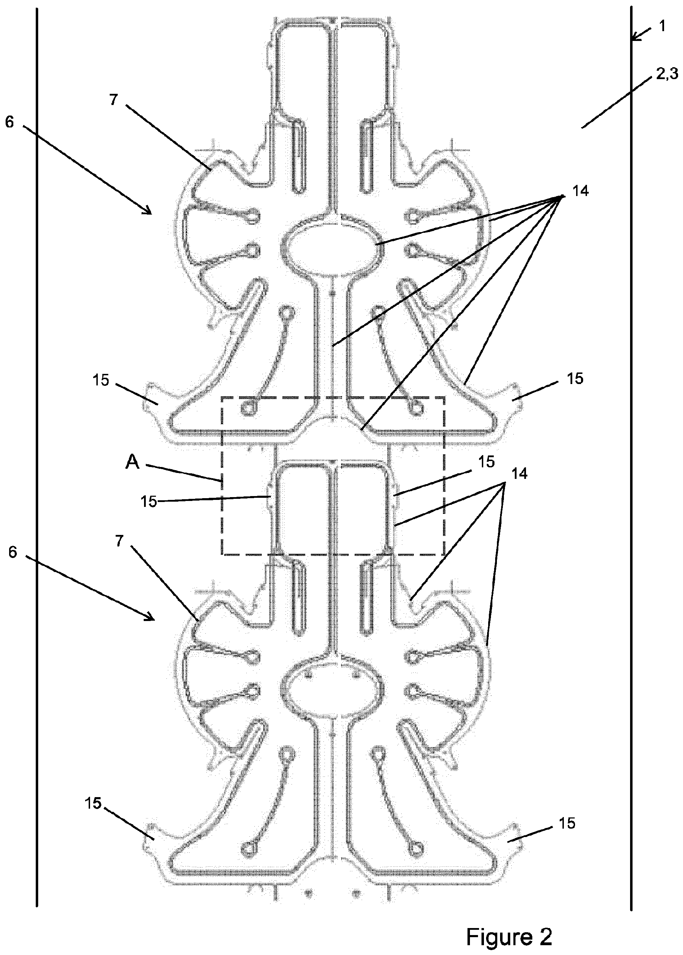

Figure 2 illustrates a subsequent stage in the method of the present invention and shows region of the flexible web 1 following an initial cutting step. A plurality of first cuts 14 are made simultaneously through both fabric layers 2, 3, for example via a laser cutting technique. As shown in Figure 2, the first cuts 14 are made outside the periphery of each airbag preform 6, as defined by the peripheral seams 7. As will also be appreciated, the first cuts 14 may be made proximate, but spaced outwardly from the periphery of each airbag preform 6 (for example by approximately 1cm) and may generally follow the shape of the peripheral seam 7. However, it is possible to configure some of the first cuts 14 so that they may have regions which are spaced somewhat further from the peripheral seams 7, for example to define fabric mounting tabs for the completed airbag - for example as shown at 15 in Figure 2.

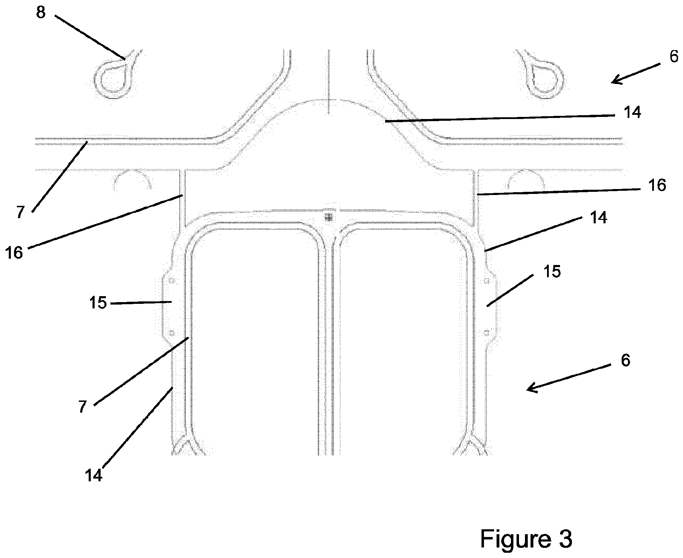

Figure 3 shows an enlarged region (denoted A in Figure 2) of the flexible web 1 after the initial cutting step, and in particular shows the configuration of the first cuts 14 made in the area between a pair of adjacent airbag preforms 6. The first cuts 14 are configured to collectively encircle the periphery of each airbag preform 6, except for a pair (in this embodiment) of uncut connecting regions 16 of the flexible web 1 which are located between the pair of adjacent airbag preforms 6. Figure 3 shows the uncut connecting regions 16 being very narrow (for example 5mm in width, measured in the weft direction of the flexible web 1), but in other embodiments the uncut connecting regions 16 may be wider (for example up to 50mm in width in the weft direction).

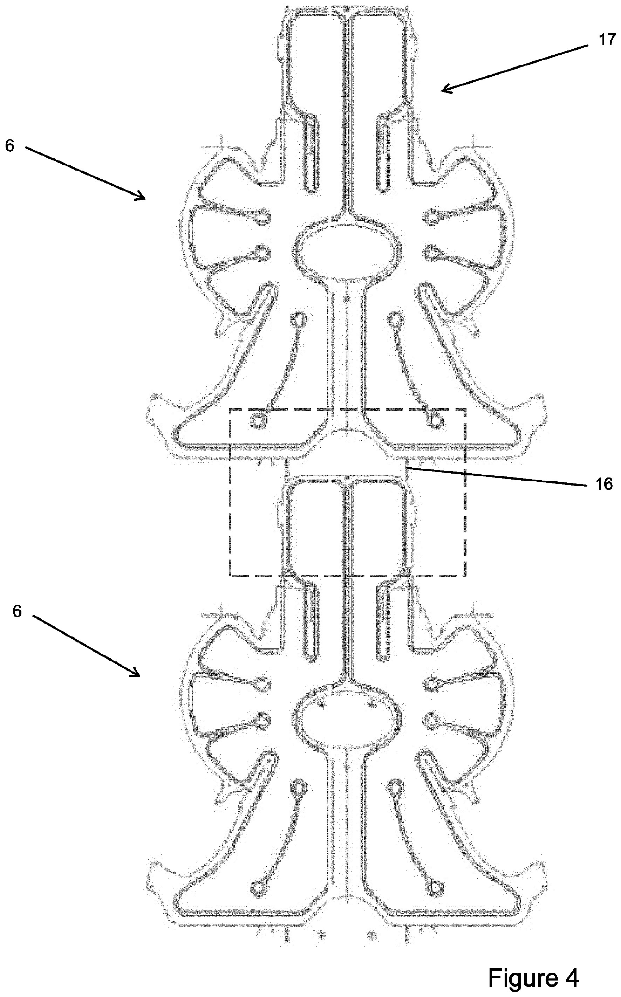

Following the initial cutting step described above, there follows a removal step in which regions of the two fabric layers 2, 3 outside the periphery of each airbag preform 6, and which are separated by the first cuts 14, are removed from the flexible web 1 shown in Figures 2 and 3. Figure 4 denotes the result of this removal step, and in particular shows a reduced web 17 which is formed by removal of the separated (i.e. cut away) fabric regions of the flexible web 1 shown in Figure 2. As will be appreciated, large side regions of the fabric layers 2, 3 are removed from the flexible web. Having regard to the region of the flexible web 1 shown in Figure 3, it is to be appreciated that the region of each fabric layer 2, 3 between the two neighbouring airbag preforms 6 and between the two uncut connecting regions 16 is also removed. As will be appreciated, all extraneous fabric outside the airbag preforms 6 is thus removed from the flexible web 1, except for narrow regions extending around the peripheries of the airbag preforms 6, and the uncut connecting regions 16 between neighbouring airbag preforms 6. The airbag preforms 16 nevertheless remain interconnected by the connecting regions 16 extending between neighbouring airbag preforms 6, and so the reduced web 17 remains coherent. The reduced web 17 may therefore be rolled onto or into a roll after the above-described removal step.

As will be appreciated, the illustrated reduced web 17 has a reduced width in the weft direction compared to the initial flexible web 1 illustrated in Figure 2. As will also be appreciated, because the fabric layers 2, 3 of the initial flexible web 1 are separate from one another except for where they are interwoven to define the seams 7, 8 of the airbag preforms 6, the edge regions of the resulting reduced web 17, and also the connecting regions 16, each comprise two layers of unconnected fabric.

In the event that the flexible web 1 was not coated with polyurethane before the initial cutting step, the reduced web 17 may instead be coated with a thin surface coating of polyurethane after the above-described cutting and removal steps. The polyurethane coating may be applied by a spraying technique and is preferably applied to both sides of the reduced web 17.

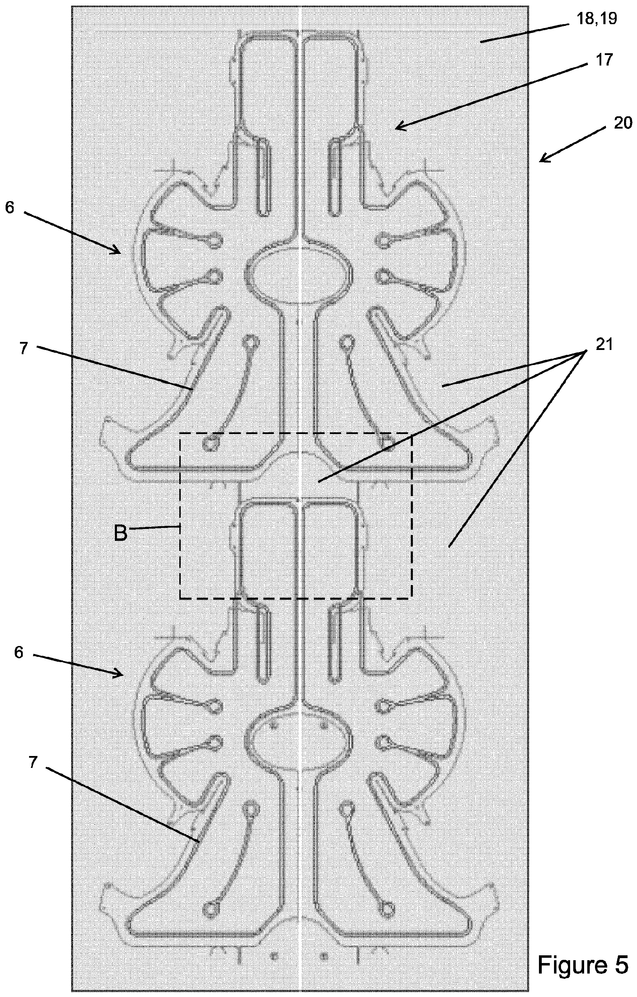

The reduced web 17 may then laminated, as a whole, between two thin film layers 18,19 to form a laminated web 20 as shown schematically in Figure 5. The thin film layers 18, 19 are preferably formed of thermoplastic polyurethane (TPU). As will be noted, the thin film layers 18, 19 have a width greater than the width of the reduced web 17, so that the entirety of the reduced web 17 is received between the thin film layers 18, 19 during the laminating step. The two film layers 18,19 are sealed directly to one another in all regions where they make contact with one another, thereby forming a peripheral seal 21 extending around the peripheral seam 7 of each airbag preform 6, except at the locations of the connecting regions 16.

The laminated web 20 may then be rolled onto or into a roll, prior to subsequent steps in the method.

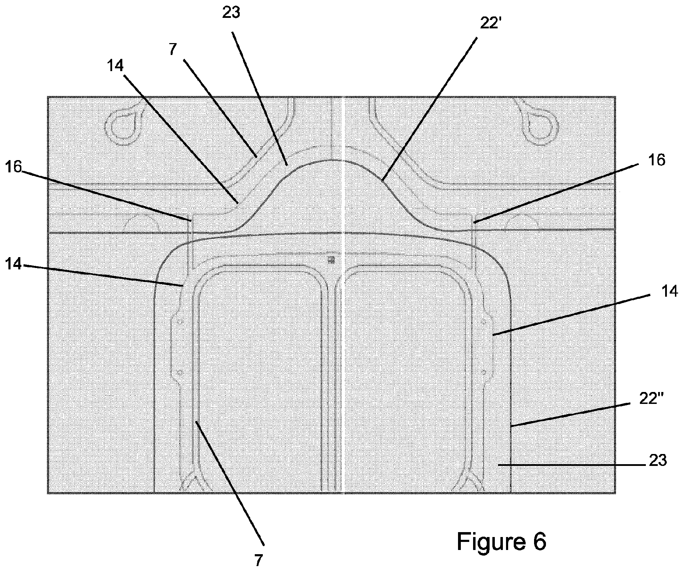

Following the above-described laminating step, the laminated web 20 is subjected to a second cutting step in which peripheral cuts 22 are made through the laminated web 20. This is illustrated most clearly in Figure 6, which shows an enlarged region (denoted B in Figure 5) of the laminated web 20 between adjacent airbag preforms 6. Each peripheral cut 22 extends around the outside of the peripheral seam 7 of a respective airbag preform 6. Figure 6 thus shows parts of two such peripheral cuts 22 - the uppermost peripheral cut 22' extending around a first airbag preform 6, and the lowermost peripheral cut 22" extending around a second (lower in Figure 6) airbag preform 6. The peripheral cuts 22 are each made in spaced relation to a respective peripheral seam 7 and outside the peripheral seam 7. It is preferred that the peripheral cuts 22 will generally follow the shape of the peripheral seam 7, or alternatively (at least in some regions, such as the mounting tab regions 15) may follow the shape of the first cuts 14 encircling the airbag preforms 6. It is proposed that the peripheral cuts 22 may be spaced approximately 1cm from the initial cuts 14 (now defining the edges of the fabric).

As shown in Figure 6, the peripheral cuts 22 extend through the connecting regions 16 which served to interconnect the airbag preforms 6 in the web during the previous laminating step. The peripheral cuts 22 thus split the connecting regions 16, thereby separating the airbag preforms 6 from one another, and thus providing discrete laminated airbags.

Each resulting laminated airbag will be understood to have a peripheral edge-seal 23 defined by the sealed thin film layers 18, 19 around the outside of its peripheral seam 7. The peripheral edge-seal 23 will extend around the entire periphery of the finished airbag, except for where the remnants of the connecting regions 16 are located. At these positions, the remnants of the connecting regions 16 will extend across the edge-seal 23 of the airbag, and can optionally be sealed by a post-production step which can, for example, involve bonding the two fabric layers of the connecting region remnants to one another.

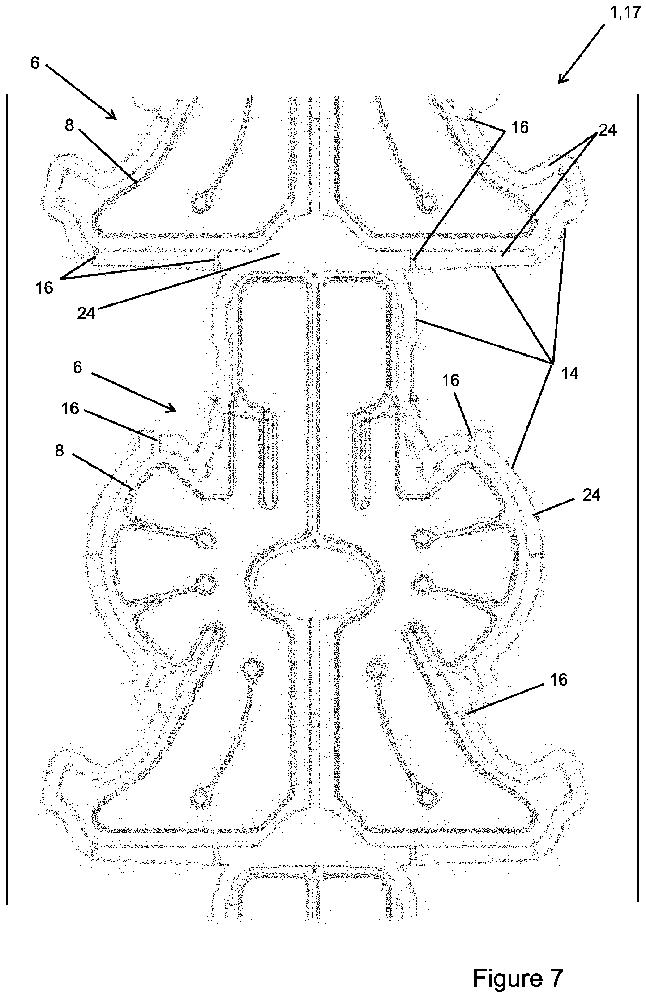

Turning now to consider Figures 7 to 11, an alternative method embodying the present invention will be described. This method shares several steps and features with the method described above with reference to Figures 1 to 10, and so identical or similar steps and features are not described in detail again, and the same reference numbers are used to denote corresponding features.

Figure 7 is a view similar to that of Figure 2, but which shows an alternative way of making the first cuts 14 through the fabric layers 2, 3 of the initial flexible web 1. In this embodiment, each first cut 14 circuital so as to circumscribe a respective region 24 of each fabric layer 2, 3. It will thus be seen that each first cut 14 follows a continuous path around a respective region 24. Nevertheless, each circuital first cut 14 is again made outside the periphery of an airbag preform 6, as defined by the peripheral seam 7, and has a region which generally follows the shape of the peripheral seam. And the circuital first cuts 14 again collectively encircle the periphery of each airbag preform 6. The circuital first cuts 14 are provided at spaced-apart positions around the periphery of each airbag preform 6, so that uncut connecting regions 16 (similar to those of the previously described embodiment) are defined between each adjacent pair of circuital cuts 14.

After the circuital first cuts 14 are made in the manner described above, the circumscribed regions 24 of the fabric layers 2, 3 are then removed from the flexible web 1 to form a reduced web 17 comprising respective windows defined by the circuital first cuts 14. As will be appreciated, because in this embodiment the regions of fabric 2, 3 removed from the flexible web 1 are confined to the regions circumscribed by the circuital first cuts 14, the resulting reduced web 17 retains considerably more fabric than the reduced web 17 of the previously described embodiment (as shown in Figure 4). Indeed, it will be seen from Figure 7 that the reduced web 17 remains of the same width (in the weft direction) as the flexible web 1 from which it was formed. This retention of more fabric in the reduced web 17 can make the reduced web 17 easier to handle, because it will retain more integrity. For example, the reduced web 17 of Figure 7 may be more easily rolled into or onto a roll.

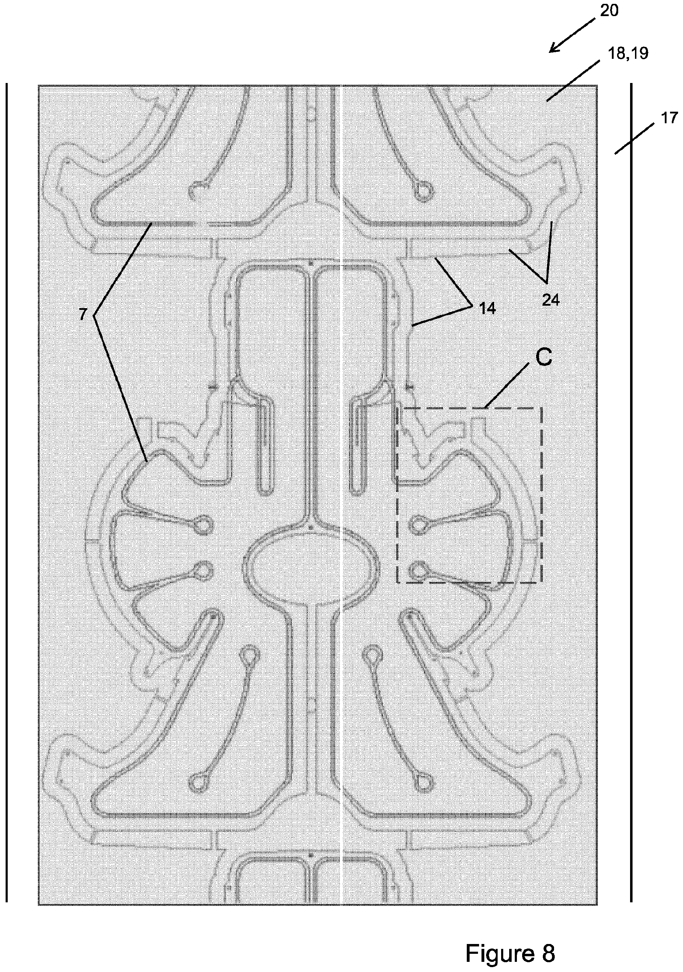

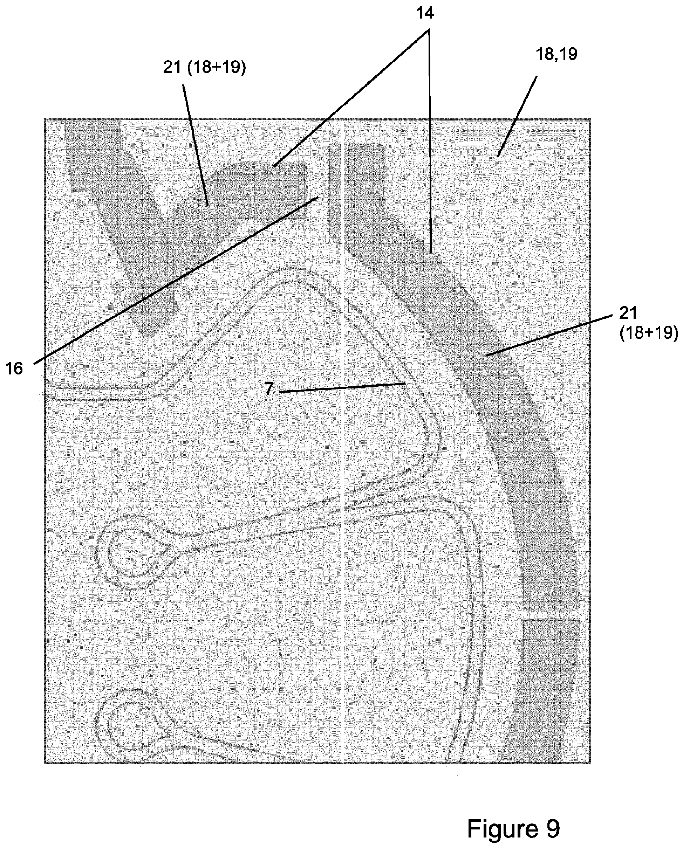

The reduced web 17 may then laminated between two thin film layers 18,19 to form a laminated web 20 as shown schematically in Figure 8. The film layers are again preferably formed of thermoplastic polyurethane (TPU). As will be noted, the thin film layers 18, 19 may have a width which is somewhat less than the width of the reduced web 17 in this embodiment. However, the thin film layers 18,19 should be sufficiently wide to cover all of the windows defined within the circuital cuts 14. As will be appreciated, the two film layers 18, 19 will thus contact one another through each of the windows in the reduced web 17, and so are sealed to one another in those regions, as denoted schematically in Figure 9 which shows an enlarged region (denoted C in Figure 8) of the laminated web 20. The resulting sealed regions of the thin film layers 18, 19 therefore cooperate to collectively form a peripheral seal 21 extending around the peripheral seam 7 of each airbag preform 6, except again at the location of each connecting region 16.

The laminated web 20 may then be rolled onto or into a roll, prior to subsequent steps in the method.

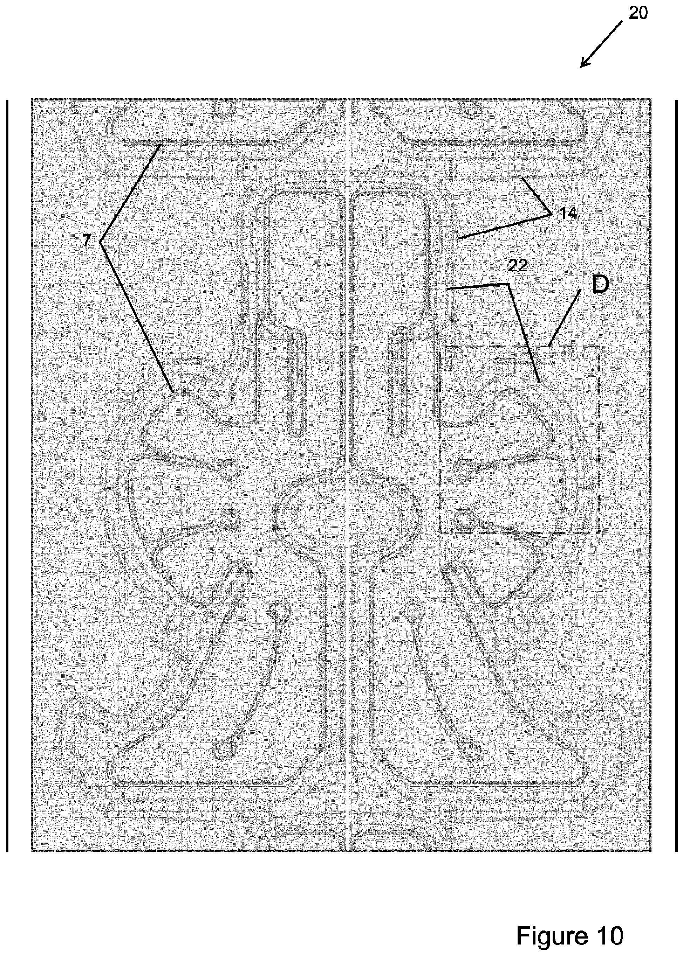

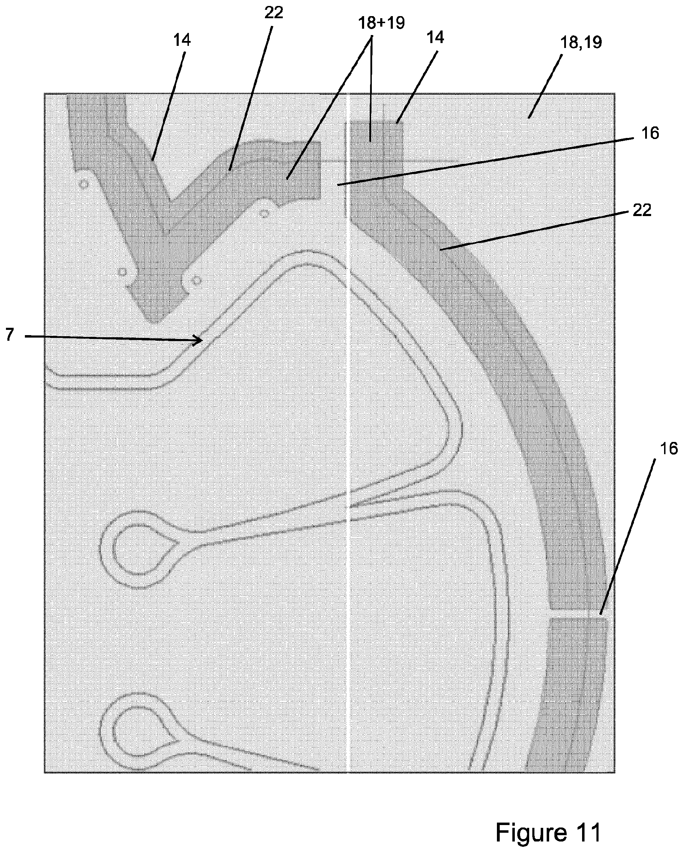

Following the above-described laminating step, the laminated web 20 is subjected to a second cutting step in which peripheral cuts 22 are made through the laminated web 20. This is illustrated most clearly in Figure 10, and in Figure 11 which shows an enlarged region (denoted D in Figure 10) of the laminated web 20. The peripheral cuts 22 extend around the outside of the peripheral seams 7 of the airbag preforms 6, in spaced relation thereto. As shown in Figures 10 and 11, the peripheral cuts 22 generally follow the shape of a peripheral seam 7. It is to be noted that the peripheral cuts 22 follow paths extending along and within the windows through which the thin film layers 18, 19 are sealed together. However, between adjacent windows, the peripheral cuts 22 extend through the connecting regions 16. The peripheral cuts 22 thus split the connecting regions 16, thereby separating the airbag preforms 6 from one another and from the laminated web 20, and thus providing discrete laminated airbags.

As will therefore be appreciated, each laminated airbag resulting from the alternative method described above with reference to Figures 7 to 11 will again be understood to have a peripheral edge-seal defined by the sealed thin film layers 18, 19 around the outside of its peripheral seam 7. The peripheral edge-seal will extend around the entire periphery of the finished airbag, except for where the remnants of the connecting regions 16 are located. At these positions, the remnants of the connecting regions 16 will extend across the edge-seal of the airbag, and can optionally be sealed by a post-production step which can, for example, involve bonding the two fabric layers of the connecting region remnants to one another.

It is envisaged that in variants of both of the above-described methods, the initial flexible web 1 may be woven so that the regions of the fabric layers 2, 3 which will define the connection regions 16 may have a somewhat different weave structure (i.e. warp/yarn pattern) than the rest of the flexible web. For example, it is envisaged that the regions of the fabric layers 2, 3 which will define the connecting regions 16 may be specially woven to have a surface finish which is optimised for adhesion to respective thin film layers 18, 19. This may be helpful in improving the seal effect at the remnants of the connecting regions 16, where the edge-seals 23 of the finished airbags are interrupted.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A method of producing laminated airbags, the method involving:
providing a flexible web (1) comprising a pair of superimposed woven fabric layers (2,3) with a plurality of adjacent airbag preforms (6) formed between said fabric layers (2,3) such that each said airbag preform (6) comprises a respective peripheral seam (7) interconnecting said woven fabric layers (2,3) and defining a periphery of the respective airbag preform (6);
an initial cutting step in which a plurality of first cuts (14) are made through both fabric layers (2,3) outside the periphery of each airbag preform (6), said cuts (14) cooperating to collectively encircle the periphery of each said airbag preform (6) except for at least one uncut connecting region (16) of the flexible web (1) located between each respective adjacent pair of airbag preforms (6);
a removal step in which regions of said fabric layers (2,3) outside the periphery of each airbag preform (6) and which are separated by said cuts (14) are removed from the flexible web (1) to form a reduced web (17) in which said airbag preforms (6) remain interconnected by the or each said connecting region (16);
a laminating step in which said reduced web (17) is laminated between two thin film layers (18,19) to form a laminated web (20), wherein said thin film layers (18,19) are sealed directly to one another around each said airbag preform (6) to form a respective peripheral seal (21) extending around the peripheral seam (7) of each said airbag preform (6) except at the location of the or each said connecting region (16); and
a second cutting step in which a respective peripheral cut (22) is made through said laminated web (20), around each peripheral seam (7) and in the region of the respective said peripheral seal (21), thereby separating a respective laminated airbag from said laminated web (20).

2. A method according to claim 1, wherein each said airbag preform (6) is defined within said flexible web (1) by a respective said peripheral seam (7) which is formed by a region of the web (1) in which yarns (4, 5) of the weave of one said layer (2) are interwoven with yarns (4,5) of the weave of the other said layer (3).

3. A method according to claim 1 or claim 2, wherein said superimposed woven fabric layers (2,3) are unconnected to one another within the or each connecting region (16).

4. A method according to any preceding claim, wherein at least part of each first cut (14) made in said initial cutting step is proximate but spaced outwardly from the periphery of a said airbag preform (6).

5. A method according to any preceding claim, wherein each said first cut (14) made in said initial cutting step is circuital so as to circumscribe a respective region (24) of each said fabric layer (2,3) for removal from the flexible web (1) in said removal step, thereby defining a respective window in said reduced web (17).

6. A method according to claim 5, wherein said initial cutting step provides a plurality of said connecting regions (16) at spaced-apart positions around the periphery of each said airbag preform (6), each said connecting region (16) being defined between an adjacent pair of said windows in said reduced web (17).

7. A method according to claim 5 or claim 6, wherein said laminating step involves sealing said film layers (18,19) directly to one another through each said window formed in said reduced web (17).

8. A method according to any preceding claim, wherein said initial cutting step involves making said first cuts (14) simultaneously through both layers of woven fabric (2,3).

9. A method according to any preceding claim, wherein said peripheral cuts (22) made in said second cutting step are each made in spaced relation to a respective said peripheral seam (7) and outside the peripheral seam (7).

10. A method according to any preceding claim, wherein each said peripheral cut (22) extends through the or each said connecting region (16), thereby splitting the or each said connecting region (16).

11. A method according to any preceding claim, further comprising a winding step in which the reduced web (17) is wound onto or into a roll, said winding step being performed between said removal step and said laminating step.

12. A method according to any preceding claim, further comprising a winding step in which the laminated web (20) is wound onto or into a roll, said winding step being performed between said laminating step and said second cutting step.

13. A method according to any preceding claim in which either: i) said flexible web (1) is coated on at least one side with a coating prior to said initial cutting step, or ii) said reduced web (17) is coated on at least one side with a coating prior to said laminating step, wherein said coating optionally comprises polyurethane.

14. A method according to any preceding claim, wherein said laminating step involves laminating said reduced web (17) between two thin-film layers 18,19) of thermoplastic polyurethane ("TPU").

15. A laminated airbag produced according to the method of any preceding claim.

## Patentansprüche

1. Verfahren zum Herstellen von laminierten Airbags, wobei das Verfahren beinhaltet:
Bereitstellen einer flexiblen Bahn (1), umfassend ein Paar übereinanderliegender Gewebelagen (2,3) mit einer Vielzahl benachbarter Airbag-Vorformlinge (6), die zwischen den Gewebelagen (2,3) derart ausgebildet sind, dass jeder Airbag-Vorformling (6) eine jeweilige Umfangsnaht (7) umfasst, die die Gewebelagen (2,3) miteinander verbindet und einen Umfang des jeweiligen Airbag-Vorformlings (6) definiert;
einen anfänglichen Schneidschritt, bei dem eine Vielzahl von ersten Schnitten (14) durch beide Gewebelagen (2,3) außerhalb des Umfangs jedes Airbag-Vorformlings (6) vorgenommen wird, wobei die Schnitte (14) zusammenwirken, um den Umfang jedes Airbag-Vorformlings (6) kollektiv zu umschließen, mit Ausnahme von mindestens einem ungeschnittenen Verbindungsbereich (16) der flexiblen Bahn (1), der sich zwischen jedem entsprechenden benachbarten Paar von Airbag-Vorformlingen (6) befindet;
einen Entfernungsschritt, bei dem Bereiche der Gewebelagen (2,3) außerhalb des Umfangs jedes Airbag-Vorformlings (6) und die durch die Schnitte (14) getrennt sind, von der flexiblen Bahn (1) entfernt werden, um eine reduzierte Bahn (17) auszubilden, in der die Airbag-Vorformlinge (6) durch den oder jeden Verbindungsbereich (16) miteinander verbunden bleiben;
einen Laminierschritt, bei dem die reduzierte Bahn (17) zwischen zwei Dünnfilmlagen (18,19) laminiert wird, um eine laminierte Bahn (20) auszubilden, wobei die Dünnfilmlagen (18,19) um jeden Airbag-Vorformling (6) herum direkt miteinander versiegelt werden, um eine jeweilige Umfangsversiegelung (21) auszubilden, die sich um die Umfangsnaht (7) jedes Airbag-Vorformlings (6) herum erstreckt, außer an der Stelle des oder jedes Verbindungsbereichs (16); und
einen zweiten Schneidschritt, bei dem ein jeweiliger Umfangsschnitt (22) durch die laminierte Bahn (20) um jede Umfangsnaht (7) herum und in dem Bereich der jeweiligen Umfangsversiegelung (21) vorgenommen wird, wodurch ein jeweiliger laminierter Airbag von der laminierten Bahn (20) getrennt wird.

2. Verfahren nach Anspruch 1, wobei jeder Airbag-Vorformling (6) innerhalb der flexiblen Bahn (1) durch eine jeweilige Umfangsnaht (7) definiert ist, die durch einen Bereich der Bahn (1) ausgebildet ist, in dem Garne (4, 5) der Gewebebindung einer Lage (2) mit Garnen (4, 5) der Gewebebindung der anderen Lage (3) verwoben sind.

3. Verfahren nach Anspruch 1 oder 2, wobei die übereinanderliegenden Gewebelagen (2,3) innerhalb des oder jedes Verbindungsbereichs (16) nicht miteinander verbunden sind.

4. Verfahren nach einem der vorstehenden Ansprüche, wobei mindestens ein Teil jedes ersten Schnitts (14), der in dem anfänglichen Schneidschritt vorgenommen wird, nahe bei, aber nach außen beabstandet von dem Umfang eines Airbag-Vorformlings (6) ist.

5. Verfahren nach einem der vorstehenden Ansprüche, wobei jeder erste Schnitt (14), der in dem anfänglichen Schneidschritt vorgenommen wird, kreisförmig ist, um einen jeweiligen Bereich (24) jeder Gewebelage (2,3) für die Entfernung aus der flexiblen Bahn (1) in dem Entfernungsschritt zu umschreiben, wodurch ein jeweiliges Fenster in der reduzierten Bahn (17) definiert wird.

6. Verfahren nach Anspruch 5, wobei der anfängliche Schneidschritt eine Vielzahl der Verbindungsbereiche (16) an beabstandeten Positionen um den Umfang jedes Airbag-Vorformlings (6) herum bereitstellt, wobei jeder Verbindungsbereich (16) zwischen einem benachbarten Paar der Fenster in der reduzierten Bahn (17) definiert ist.

7. Verfahren nach Anspruch 5 oder 6, wobei der Laminierschritt das direkte Versiegeln der Filmlagen (18,19) miteinander durch jedes Fenster beinhaltet, das in der reduzierten Bahn (17) ausgebildet ist.

8. Verfahren nach einem der vorstehenden Ansprüche, wobei der anfängliche Schneidschritt das gleichzeitige Vornehmen der ersten Schnitte (14) durch beide Lagen des Gewebes (2,3) beinhaltet.

9. Verfahren nach einem der vorstehenden Ansprüche, wobei die Umfangsschnitte (22), die in dem zweiten Schneidschritt vorgenommen werden, jeweils in beabstandeter Beziehung zu einer jeweiligen Umfangsnaht (7) und außerhalb der Umfangsnaht (7) vorgenommen werden.

10. Verfahren nach einem der vorstehenden Ansprüche, wobei sich jeder der Umfangsschnitte (22) durch den oder jeden Verbindungsbereich (16) erstreckt, wodurch der oder jeder Verbindungsbereich (16) geteilt wird.

11. Verfahren nach einem der vorstehenden Ansprüche, ferner umfassend einen Wickelschritt, in dem die reduzierte Bahn (17) auf oder in eine Rolle gewickelt wird, wobei der Wickelschritt zwischen dem Entfernungsschritt und dem Laminierschritt durchgeführt wird.

12. Verfahren nach einem der vorstehenden Ansprüche, ferner umfassend einen Wickelschritt, bei dem die laminierte Bahn (20) auf oder in eine Rolle gewickelt wird, wobei der Wickelschritt zwischen dem Laminierschritt und dem zweiten Schneidschritt durchgeführt wird.

13. Verfahren nach einem der vorstehenden Ansprüche, bei dem entweder: i) die flexible Bahn (1) vor dem anfänglichen Schneidschritt auf mindestens einer Seite mit einer Beschichtung beschichtet wird, oder ii) die reduzierte Bahn (17) vor dem Laminierschritt auf mindestens einer Seite mit einer Beschichtung beschichtet wird, wobei die Beschichtung optional Polyurethan umfasst.

14. Verfahren nach einem der vorstehenden Ansprüche, wobei der Laminierschritt das Laminieren der reduzierten Bahn (17) zwischen zwei Dünnfilmlagen (18, 19) aus thermoplastischem Polyurethan ("TPU") beinhaltet.

15. Laminierter Airbag, der nach dem Verfahren nach einem der vorstehenden Ansprüche hergestellt wird.

## Revendications

1. Procédé pour la fabrication de coussins gonflables stratifiés, le procédé comportant :
la fourniture d'une bande flexible (1) comprenant une paire de couches de tissu (2, 3) tissé superposées présentant une pluralité de préformes de coussin gonflable (6) adjacentes formées entre lesdites couches de tissu (2, 3) de telle sorte que chacune desdites préformes de coussin gonflable (6) comprend une couture périphérique (7) respective reliant entre elles lesdites couches de tissu (2, 3) tissé et définissant une périphérie de la préforme de coussin gonflable (6) respective ;
une étape de découpe initiale au cours de laquelle une pluralité de premières découpes (14) sont réalisées à travers les deux couches de tissu (2, 3) à l'extérieur de la périphérie de chaque préforme de coussin gonflable (6), lesdites découpes (14) coopérant pour encercler ensemble la périphérie de chacune desdites préformes de coussin gonflable (6) à l'exception d'au moins une région de liaison (16) non coupée de la bande flexible (1), laquelle région de liaison est située entre chaque paire adjacente respective de préformes de coussin gonflable (6) ;
une étape de retrait au cours de laquelle des régions desdites couches de tissu (2, 3) à l'extérieur de la périphérie de chaque préforme de coussin gonflable (6), lesquelles régions sont séparées par lesdites découpes (14), sont retirées de la bande flexible (1) pour former une bande réduite (17) dans laquelle lesdites préformes de coussin gonflable (6)restent reliées entre elles par la région de liaison ou par chacune desdites régions de liaison (16) ;
une étape de stratification au cours de laquelle ladite bande réduite (17) est stratifiée entre deux couches de film mince (18, 19) pour former une bande stratifiée (20), dans lequel lesdites couches de film mince (18, 19) sont scellées directement l'une à l'autre autour de chacune desdites préformes de coussin gonflable (6) pour former un joint périphérique (21) respectif s'étendant autour de la couture périphérique (7) de chacune desdites préformes de coussin de gonflable (6) sauf au niveau de l'emplacement de la région de liaison ou de chacune desdites régions de liaison (16) ; et
une seconde étape de découpe au cours de laquelle une découpe périphérique (22) respective est réalisée à travers ladite bande stratifiée (20), autour de chaque couture périphérique (7) et dans la région dudit joint périphérique (21) respectif, séparant ainsi un coussin gonflable laminé respectif de ladite bande stratifiée (20).

2. Procédé selon la revendication 1, dans lequel chacune desdites préformes de coussin gonflable (6) est définie dans ladite bande flexible (1) par une dite couture périphérique (7) respective qui est formée par une région de la bande (1), région dans laquelle des fils (4, 5) du tissage d'une dite couche (2) sont entrelacés avec des fils (4, 5) du tissage de l'autre dite couche (3).

3. Procédé selon la revendication 1 ou la revendication 2, dans lequel lesdites couches de tissu (2, 3) tissé superposées sont non reliées les unes aux autres à l'intérieur de la région de liaison ou de chacune des régions de liaison (16).

4. Procédé selon l'une quelconque revendication précédente, dans lequel au moins une partie de chaque première découpe (14) réalisée au cours de ladite étape de découpe initiale est à proximité de la périphérie de ladite préforme de coussin gonflable (6), mais espacée vers l'extérieur.

5. Procédé selon l'une quelconque revendication précédente, dans lequel chacune desdites premières découpes (14) réalisée au cours de ladite étape de découpe initiale est en circuit de manière à entourer une région (24) respective de chacune desdites couches de tissu (2, 3) pour le retrait de la bande flexible (1) au cours de ladite étape de retrait, définissant ainsi une fenêtre respective dans ladite bande réduite (17).

6. Procédé selon la revendication 5, dans lequel ladite étape de découpe initiale fournit une pluralité desdites régions de liaison (16) au niveau de positions espacées autour de la périphérie de chacune desdites préformes de coussin gonflable (6), chacune desdites régions de liaison (16) étant définie entre une paire adjacente desdites fenêtres dans ladite bande réduite (17).

7. Procédé selon la revendication 5 ou la revendication 6, dans lequel ladite étape de stratification comporte le scellement desdites couches de film (18, 19) directement les unes aux autres à travers chacune desdites fenêtres formée dans ladite bande réduite (17).

8. Procédé selon l'une quelconque revendication précédente, dans lequel l'étape de découpe initiale comporte la réalisation desdites premières découpes (14) simultanément à travers les deux couches de tissu (2, 3).

9. Procédé selon l'une quelconque revendication précédente, dans lequel lesdites découpes périphériques (22) réalisées au cours de ladite seconde étape de découpe sont réalisées chacune en relation espacée par rapport à ladite couture périphérique (7) respective et à l'extérieur de la couture périphérique (7).

10. Procédé selon l'une quelconque revendication précédente, dans lequel chacune desdites découpes périphériques (22) s'étend à travers la région de liaison ou chacune desdites régions de liaison (16), divisant ainsi la région de liaison ou chacune desdites régions de liaison (16).

11. Procédé selon l'une quelconque revendication précédente, comprenant en outre une étape d'enroulement au cours de laquelle la bande réduite (17) est enroulée sur ou en un rouleau, ladite étape d'enroulement étant réalisée entre ladite étape de retrait et ladite étape de stratification.

12. Procédé selon l'une quelconque revendication précédente, comprenant en outre une étape d'enroulement au cours de laquelle la bande stratifiée (20) est enroulée sur ou en un rouleau, ladite étape d'enroulement étant réalisée entre ladite étape de stratification et ladite seconde étape de découpe.

13. Procédé selon l'une quelconque revendication précédente dans lequel soit : i) ladite bande flexible (1) est revêtue sur au moins un côté d'un revêtement avant ladite étape de découpe initiale, ou ii) ladite bande réduite (17) est revêtue sur au moins un côté d'un revêtement avant ladite étape de stratification, dans lequel ledit revêtement comprend éventuellement du polyuréthane.

14. Procédé selon l'une quelconque revendication précédente, dans lequel ladite étape de stratification comporte la stratification de ladite bande réduite (17) entre deux couches de film minces (18, 19) de polyuréthane thermoplastique (« TPU »).

15. Coussin gonflable laminé fabriqué selon le procédé conformément à l'une quelconque revendication précédente.
